# EUROPEAN PATENT SPECIFICATION

(11) **EP 0 904 192 B1**
(45) Date of publication and mention of the grant of the patent: **21.11.2001**
(21) Application number: 97923375.6
(22) Date of filing: 12.05.1997
(51) Int. Cl.: B29D 17/00, G11B 7/26

(54) **DEVICE FOR BENDING A FLAT, ROUND DISK ELEMENT**
VORRICHTUNG ZUM BIEGEN VON FLACHEN, RUNDEN SCHEIBENELEMENTEN
DISPOSITIF POUR COURBER UN ELEMENT DE DISQUE PLAT ET CIRCULAIRE

(30) Priority: 13.05.1996 SE 9601815
(43) Date of publication of application: 31.03.1999
(73) Proprietor: ODME International B.V., 5503 LP Veldhoven (NL)
(72) Inventor: ÖHMAN, Ove, S-755 91 Uppsala (SE); BERING, Lars, S-183 64 Täby (SE)
(74) Representative: Winblad, Hans Peter
(86) International application number: SE9700774
(87) International publication number: WO9743111

(56) References cited:
- PATENT ABSTRACTS OF JAPAN, Vol. 12, No. 267; & JP,A,63 049 424, (SONY CORP), 2 March 1988.

## Description

The present invention relates to a device for bending a flat, round disc element, especially for forming an enlarged gap between two adjacent, facing disc elements, which are to be glued together, said device comprising a first, stationary means for supporting a central surface area of one of the disc elements, a second means for contact with a radially outer surface area of said disc element, said second means being arranged to be movable relative to said first means in a direction transverse to the plane of said disc element which is to be bent, said second means being movable between a first position, in which the first and second means are arranged to be in contact with the disc element in a flat state thereof, and a second position, in which the first and second means hold the disc element in an at least partially bent state.

Our previous Swedish patent application SE-A-9601263-8 describes a process and a device for gluing together two disc elements into a digital video disc. The two disc elements are held coaxially facing each other so that a small gap is left between the disc elements, and this gap is to be partially enlarged to allow insertion of a glue application nozzle for applying an adhesive simultaneously on the facing sides of the disc elements at the same time as they are rotated, so that an annular string of glue is formed. According to this previous application it is suggested that the disc elements be held in a partially convex-curved shape to form a radially outwardly widening gap between the disc elements to thereby facilitate insertion of the glue application nozzle therein.

The previous application does not show or describe, however, how the device is to be constructed in detail to perform this task.

JP-A-63-49424 discloses a device for bending a flat disc element in accordance with that mentioned in the first paragraph above. However, the first and second means do not together form a sealed space connectable to a vacuum source.

A purpose of the present invention is therefore to suggest a device which solves the problem of creating an enlarged space between the disc elements, where the glue application nozzle can be inserted so that there will be greater precision in the relative positioning of the nozzle and the disc elements.

In its most general form there is suggested for this purpose a device of the type described by way of introduction which is characterized, in accordance with the invention, in that said first and second means being adapted, in said first position of the second means, to form with the disc element a sealed space which is connectable to a vacuum source. When this sealed space is connected to a vacuum source, the radially outer portion of the disc element will be bent as the second means is retracted, so that the bent portion of the disc element can form a widened gap opening together with an adjacent disc element to thereby create sufficient space to insert a glue application nozzle.

In a preferred embodiment of the device according to the invention, the second means has the shape of a ring axially movable relative to the disc element.

The invention will be described in more detail below with reference to the accompanying drawings, in which:
- Figure 1: shows a partially sectioned side view of a unit for gluing together DVD-substrates, which comprises two reflectively oriented disc holders according to the invention to bend a radially outer area of the disc elements. The left-hand halves of the holders as shown in the Figures show the disc element in a phase prior to bending, while the right-hand halves show the disc elements in their bent or curved state;
- Figure 2: shows to the right the disc holders moved together with a glue application nozzle inserted in the widened gap obtained by the bending of the disc elements; and
- Figure 3: shows on a larger scale a radially outer portion of the holder according to the invention in cross-section.

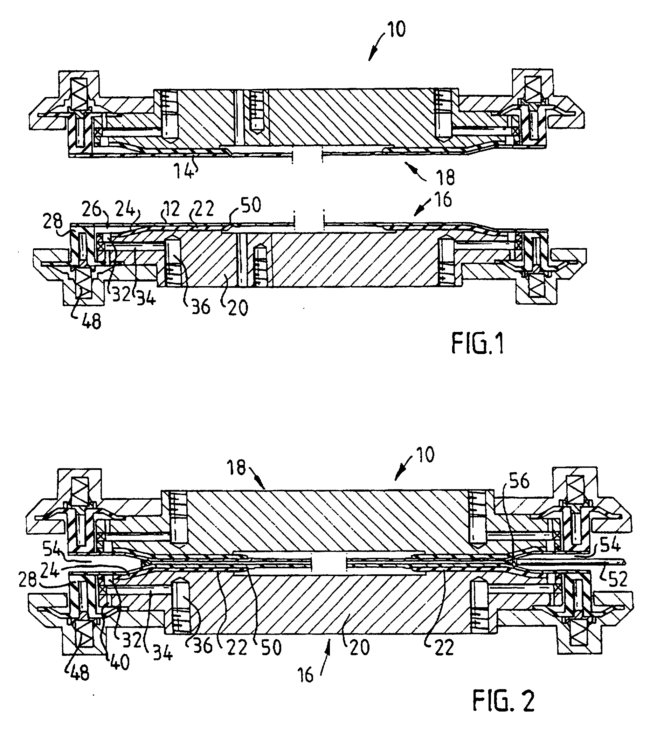

The numeral 10 in Figures 1 and 2 generally designates a unit for gluing together two thin disc substrates 12,14 into a so-called DVD. The disc elements 12,14 normally have a diameter of circa 120 mm, a thickness of circa 0.6 mm and a central hole with a diameter of circa 15 mm.

The unit 10 in Figures 1 and 2 comprises two identical, reflectively arranged disc holders 16,18, and therefore only one 16 of the holders will be described in more detail below. The holder 16 comprises a carrier plate 20 with a disc contact surface 22 of an elastic material. The disc contact surface is depressed at 24 to form an evacuatable chamber 26 for bending a radially outer area of the disc element 12.

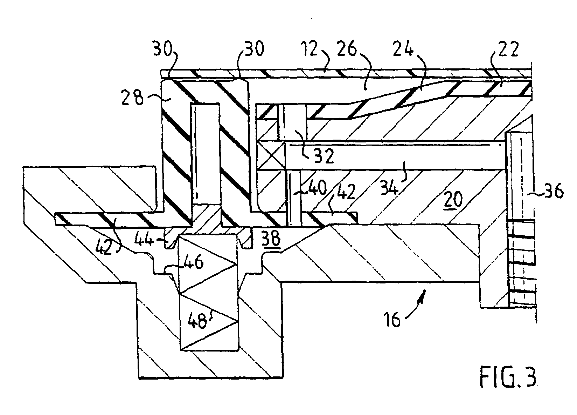

At a radially outer portion of the carrier plate 20 there is arranged an annular element 28, which is disposed, with annular sealing lips 30 (Fig. 3) to sealingly lie in contact with the disc element 12. The annular element 28 is axially resiliently mounted between a first position which is shown in Figure 3 and to the left in Figure 1, where the annular element 28 is in contact with the disc element 12 in its flat state, and a second, retracted position, which is shown in Figure 2 and to the right in Figure 1, in which the radially outer area of the disc element 12 is held bent against the depressed chamber 26. This holding of the radially outer area of the disc element 12 in a bent state is achieved by connecting the chamber 26 to a vacuum source (not shown) via channels 32, 34, 36. A space-38 under the annular element 28 can also be in communication via a channel 40 with the vacuum source in order to facilitate retraction of the annular element 28. The annular element can have a flexible flange 42 and an abutment 44 which, when the annular element is retracted, will abut against a shoulder 46 to limit the retractive movement of the annular element 28. The compressive spring element 48 is disposed to be in contact with the underside of the annular element 28 to bias it towards its extended first position. The disc contact surface 22 of the carrier plate 20 has, as does the annular element 28, at least one annular sealing lip 50 to seal the chamber 26 radially inwards.

Figure 2 shows the gluing unit 10 in a position where the holders 16 and 18 have been moved together after the flat disc elements 12,14 have been placed against the disc contact surfaces 22 and the annular elements 28 of the holders 16,18, and the vacuum source has been connected to the respective bending chambers 26 via the channels 32, 34 and 36 and to the underside of each annular element 28 via the channel 40. Thus, the disc elements 12,14 are held slightly apart in their central portions and somewhat more separated at the radially outer area to allow a glue application nozzle 52 to be inserted unimpeded into the enlarged gap 50 while the holders 16,18 are rotated, and deposit a circular string of glue 56 at the same time against the facing surfaces of the disc elements 12,14.

## Claims

1. Device for bending a flat, round disc element (12;14), especially for forming a widened gap (54) between two adjacent, facing disc elements (12;14), which are to be glued together, comprising a first, stationary means (20) for supporting a central surface area of one of the disc elements (12;14), a second means (28) for contact with a radially outer surface area of said disc element, said second means (28) being arranged to be movable relative to said first means (20) in a direction transverse to the plane of said disc element which is to be bent, said second means (28) being movable between a first position, in which the first and second means (20,28) are arranged to be in contact with the disc element in a flat state thereof, and a second position, in which the first and second means (20,28) hold the disc element in an at least partially bent state, **characterized in that** said first and second means (20,28) being adapted, in said first position of the second means, to form with the disc element a sealed space (26) which is connectable to a vacuum source.

2. Device according to Claim 1, wherein the second means has the shape of a ring (28) axially movable relative to the disc element (12;14).

3. Device according to Claim 2, wherein the ring (28) is resiliently movable against the force of spring means (48).

4. Device according to Claim 1, wherein the first means (20) has a radially outer depressed portion (24), which delimits said space (26).

5. Unit for gluing together two disc elements (12,14), especially disc substrates for digital audio, video or computer discs, comprising two devices according to any of Claims 1-4, placed reflectively in relation to each other.

## Patentansprüche

1. Vorrichtung zum Biegen von flachen, runden Scheibenelementen (12, 14), insbesondere zum Formen eines erweiterten Zwischenraums (54) zwischen zwei einander zugewandten Scheibenelementen (12, 14), die zusammengeklebt werden sollen,
mit einer ersten, stationären Einrichtung (20) zum Stützen eines mittigen Oberflächenbereichs eines der Scheibenelemente (12, 14),
mit einer zweiten Einrichtung (28) für den Kontakt mit einem radial äußeren Oberflächenbereich des Scheibenelements,
wobei die zweite Einrichtung (28) relativ zur ersten Einrichtung (20) in einer quer zur Ebene des zu biegenden Scheibenelements verlaufenden Richtung bewegbar ist,
wobei die zweite Einrichtung (28) zwischen einer ersten Position, in der die erste und die zweite Einrichtung (20, 28) in Kontakt mit dem Scheibenelement in dessen ebenem Zustand sind, und einer zweiten Position bewegbar ist, in der die erste und die zweite Einrichtung (20, 28) das Scheibenelement in einem zumindest teilweise gebogenen Zustand halten,
**dadurch gekennzeichnet,**
**daß**, wenn sich die zweite Einrichtung in der ersten Position befindet, die erste und zweite Einrichtung (20, 28) mit dem Scheibenelement einen verschlossenen Raum (26) bilden, der an eine Vakuumquelle anschließbar ist.

2. Vorrichtung nach Anspruch 1, **dadurch gekennzeichnet, daß** die zweite Einrichtung die Form eines Rings (28) hat, der relativ zu dem Scheibenelement (12, 14) in Axialrichtung bewegbar ist.

3. Vorrichtung nach Anspruch 2, **dadurch gekennzeichnet, daß** der Ring (28) federnd gegen die Kraft einer Federeinrichtung (48) bewegbar ist.

4. Vorrichtung nach Anspruch 1, **dadurch gekennzeichnet, daß** die erste Einrichtung (20) einen radial äußeren abgesenkten Abschnitt (24) aufweist, der den Raum (26) begrenzt.

5. Einheit zum Zusammenkleben von zwei Scheibenelementen (12, 14), insbesondere von Scheibensubstraten für digitale Audio-, Video- oder Computer-Disketten, die zwei Einrichtungen nach einem der Ansprüche 1 bis 4 aufweist, die spiegelbildlich zueinander angeordnet sind.

## Revendications

1. Dispositif servant à faire fléchir un disque plat et rond (12; 14), en particulier pour former un espace élargi (54) entre deux disques (12; 14) adjacents et tournés l'un vers l'autre, qui doivent être collés ensemble, comprenant un premier moyen statique (20) pour supporter une zone de surface centrale de l'un des disques (12; 14), un deuxième moyen (28) pour le contact avec une zone de surface radialement extérieure dudit disque, ledit deuxième moyen (28) étant agencé de façon à être mobile par rapport audit premier moyen (20) dans une direction transversale au plan dudit disque qui doit être fléchi, ledit deuxième moyen (28) étant mobile entre une première position, dans laquelle les premier et deuxième moyens (20, 28) sont agencés de façon à être en contact avec le disque qui est dans un état plat, et une deuxième position, dans laquelle les premier et deuxième moyens (20, 28) tiennent le disque dans un état au moins partiellement fléchi, **caractérisé en ce que** lesdits premier et deuxième moyens (20, 28) sont adaptés, dans ladite première position du deuxième moyen, pour former avec le disque un espace étanche (26) qui peut être connecté à une source de vide.

2. Dispositif selon la revendication 1, dans lequel le deuxième moyen a la forme d'un anneau (28) qui est mobile axialement par rapport au disque (12; 14).

3. Dispositif selon la revendication 2, dans lequel l'anneau (28) est mobile de manière résiliente contre la force d'un ressort (48).

4. Dispositif selon la revendication 1, dans lequel le premier moyen (20) comporte une partie en creux (24) radialement extérieure, qui délimite ledit espace (26).

5. Module servant à coller ensemble deux disques (12, 14), en particulier des substrats de disques pour disques audio, vidéo ou informatiques, comprenant deux dispositifs selon l'une quelconque des revendications 1 à 4, placés en relation opposée l'un par rapport à l'autre.
